# DEMANDE DE BREVET EUROPEEN

(11) **EP 3 744 301 A1**
(43) Date de publication de la demande: **02.12.2020**
(21) Numéro de dépôt: 19219992.5
(22) Date de dépôt: 30.12.2019
(51) Int. Cl.: A61H 3/06, E01C 5/20, E01C 5/22, B29C 45/16

(54) **DALLE DE SIGNALISATION MULTI-COULEURS ET PROCEDE POUR LA REALISATION D'UNE TELLE DALLE**

(30) Priorité: 31.05.2019 FR 1905805
(71) Demandeur: NOVAP, 01100 Bellignat (FR)
(72) Inventeur: MARTINAND, Alexandre, 01100 OYONNAX (FR)
(74) Mandataire: Cabinet Laurent & Charras

(57) **Abrégé**

Ce procédé pour la réalisation d'une dalle de signalisation en matière plastique munie d'une pluralité de zones en relief (4) dirigés vers le haut, consiste :
▪ à mettre en œuvre un moule à deux parties d'empreinte (8, 9), dont l'une (9) des parties d'empreinte comporte au moins un pavé (10) mobile en translation, la face supérieure dudit pavé, destinée à venir en contact avec l'autre partie d'empreinte statique (8) étant munie de zones en creux (11) correspondant aux zones en relief (4) à réaliser ;
▪ à refermer le moule ;
▪ à induire la translation dudit au moins un pavé mobile (10) jusqu'à ce qu'il vienne en contact avec la paroi interne de la partie d'empreinte statique (8) ;
▪ à injecter une première matière plastique d'une couleur déterminée ;
▪ à laisser partiellement refroidir ladite matière plastique ainsi injectée ;
▪ à induire la translation dudit au moins un pavé mobile (10) selon la direction opposée à la translation précédente ;
▪ à injecter une seconde matière plastique venant occuper le volume ainsi libéré et de couleur différente de la première matière plastique ;
▪ à refroidir le moule ;
▪ puis à éjecter la dalle ainsi obtenue.

La dalle de signalisation (1) ainsi obtenue comprend au moins sur sa face supérieure des zones (2, 3) de couleurs différenciées résultant du moulage.

## Description

### DOMAINE DE L'INVENTION

L'invention concerne une dalle de signalisation réalisée en matière plastique et dont la face supérieure présente au moins deux couleurs. L'invention vise plus particulièrement les dalles podo tactiles et les bandes de guidage, notamment pour aveugles et personnes mal-voyantes.

Une dalle podo tactile a notamment vocation à constituer des dispositifs au sol destinés à éveiller la vigilance des personnes en général, et en outre des personnes aveugles ou malvoyantes lors de leurs déplacements, et qui sont classiquement situés en bordure de quai d'accès aux transports collectifs, en bordure de trottoir, au droit de traversée de chaussées ou en haut de volée d'escalier.

Les applications d'une telle dalle ne se limitent cependant pas à de tels dispositifs d'éveil de vigilance et peuvent être mises en œuvre dans tout autre type d'application dans lesquels on cherche à attirer l'attention ou optimiser la signalétique.

Les bandes de guidage ont également pour finalité de favoriser le cheminement des personnes aveugles ou malvoyantes, notamment dans le cadre de leur déplacement en tous lieux, qu'il s'agisse de la voie publique ou à l'intérieur de bâtiments.

### ART ANTERIEUR

Les dalles podo tactiles, c'est-à-dire munies sur leur surface supérieure de plots en relief, sont d'un usage aujourd'hui largement répandu, et au demeurant normalisé par la norme NF P 98-351. Ces dalles ont vocation à être fixées sur le sol, typiquement par collage, en des lieux particuliers où l'on souhaite éveiller la vigilance d'usagers, qu'il s'agisse de piétons, voitures etc.

De telles dalles peuvent être réalisées en matière plastique, notamment par moulage, ou encore peuvent être de nature métallique, tel que par exemple décrit dans le document FR 2 767 846.

Si ces dalles donnent globalement satisfaction, l'expérience démontre cependant qu'elles souffrent d'un défaut de visibilité, susceptible dès lors d'affecter leur fonction première, à savoir l'éveil de la vigilance.

On se heurte à la même problématique s'agissant des bandes de guidage.

Par ailleurs, la réalisation de telles dalles fait traditionnellement appel à des procédés relativement complexes à mettre en œuvre, notamment lorsque lesdites dalles présentent des colorations différenciées. En effet, ces procédés consistent essentiellement à sublimer des colorants, techniques connues pour leurs difficultés de réglage et des conditions opérationnelles.

L'objectif recherché par la présente invention vise principalement à optimiser la visibilité desdites dalles. Elle vise également à mettre en œuvre un procédé de réalisation de telles dalles et bandes, permettant de les décliner, notamment en termes de couleurs, quasiment à l'infini, et de manière relativement simple.

### EXPOSE DE L'INVENTION

L'invention concerne donc un procédé pour la réalisation d'une dalle de signalisation en matière plastique munie d'une pluralité de zones en relief.

Ce procédé consiste :
▪ à mettre en œuvre un moule à deux parties d'empreintes, dont l'une des parties d'empreinte comporte au moins un pavé mobile en translation, la face supérieure dudit pavé, destinée à venir en contact avec l'autre partie d'empreinte, dite partie statique étant munie de zones en creux correspondant aux parties en relief ;
▪ à refermer le moule ;
▪ à induire la translation dudit au moins un pavé jusqu'à ce qu'il vienne en contact avec la paroi interne de la partie d'empreinte statique ;
▪ à injecter une première matière plastique d'une couleur déterminée ;
▪ à laisser partiellement refroidir ladite matière plastique ainsi injectée ;
▪ à induire la translation dudit au moins un pavé mobile selon la direction opposée à la translation précédente ;
▪ à injecter une seconde matière plastique venant occuper le volume ainsi libéré et de couleur différente de la première matière plastique ;
▪ à refroidir le moule ;
▪ puis à éjecter la dalle ainsi obtenue.

Ainsi, la mise en œuvre d'un moule dont l'une des empreintes, et par exemple l'empreinte inférieure, comporte au moins un pavé mobile en translation verticale, permet de limiter la progression de la première matière plastique dans des zones déterminées dans lesquelles on souhaite obtenir une première couleur, puis à obtenir la ou les secondes zones d'une couleur différente après refroidissement de ladite première matière plastique injectée et injection de la seconde matière plastique.

Afin d'optimiser la qualité de la différenciation entre les au moins deux couleurs, on munit l'empreinte statique, et par exemple l'empreinte supérieure du moule d'une nervure en saillie s'étendant sur toute la périphérie des zones destinées à être remplies de la seconde matière plastique. Ce faisant, on évite le fluage de la première matière plastique, et l'on optimise de la sorte la netteté de la différenciation entre les zones de couleurs différentes.

L'invention concerne également une dalle de signalisation en matière plastique obtenue par le procédé précité. Cette dalle est munie d'une pluralité de zones en relief par rapport au plan général dans lequel s'inscrit ladite dalle, et comprend au moins sur sa face supérieure des zones de couleurs différenciées issues de moulage.

En d'autres termes, l'invention concerne une dalle réalisée en matière plastique, et en l'espèce par moulage par injection, comprenant au moins sur sa surface visible, c'est-à-dire sur sa surface supérieure, différentes couleurs, cette différenciation de couleurs résultant du seul moulage.

En d'autres termes, les dalles de l'invention sont obtenues par injection bi-matière et/ou bicolores, et les différentes couleurs ne résultent pas de l'apposition d'un revêtement ultérieur tel que peintures, vernis etc.

Selon l'invention, les zones de couleurs différenciées correspondent à des parties de la surface supérieure de la dalle.

Alternativement, les zones de couleurs différenciée correspondent respectivement aux zones en relief et à la base.

La matière plastique mise en œuvre est choisie dans le groupe comprenant le polyuréthane thermoplastique (TPU) et le PVC souple, ou tout autre thermoplastique.

Selon l'invention, la face inférieure de la dalle, c'est-à-dire destinée à être fixée sur le sol ou sur tout autre surface, est revêtue après réalisation d'un adhésif double face, muni d'un film de protection de l'adhésif, typiquement en papier siliconé.

### BREVE DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 est une représentation schématique vue du dessus d'une première forme de réalisation de l'invention relative à une dalle podo tactile.
La figure 2 est une vue en section transversale selon la ligne II-II de la figure 1.
La figure 3 est une représentation schématique vue du dessus d'une seconde forme de réalisation de l'invention également relative à une dalle podo tactile.
La figure 4 est une vue en section transversale selon la ligne IV-IV de la figure 3.
La figure 5 est une vue du dessous simplifiée de la figure 1.
La figure 6 est une vue de détail de la figure 5.
La figure 7 est une vue en section partielle de la figure 6.
La figure 8 est une représentation schématique en section de la première étape d'injection du procédé de l'invention, dans laquelle le pavé mobile est en contact avec l'empreinte supérieure.
La figure 9 est une représentation schématique en section de la seconde étape d'injection du procédé de l'invention, dans laquelle le pavé mobile est éloigné de l'empreinte supérieure.
La figure 10 est une représentation schématique vue du dessus d'une première forme de réalisation de l'invention relative à une bande de guidage.
La figure 11 est une représentation schématique vue du dessus d'une seconde forme de réalisation de l'invention relative à une bande de guidage.
La figure 12 est une représentation schématique en section transversale de la bande des figures 10 ou 11.

### DESCRIPTION DETAILLEE DE L'INVENTION

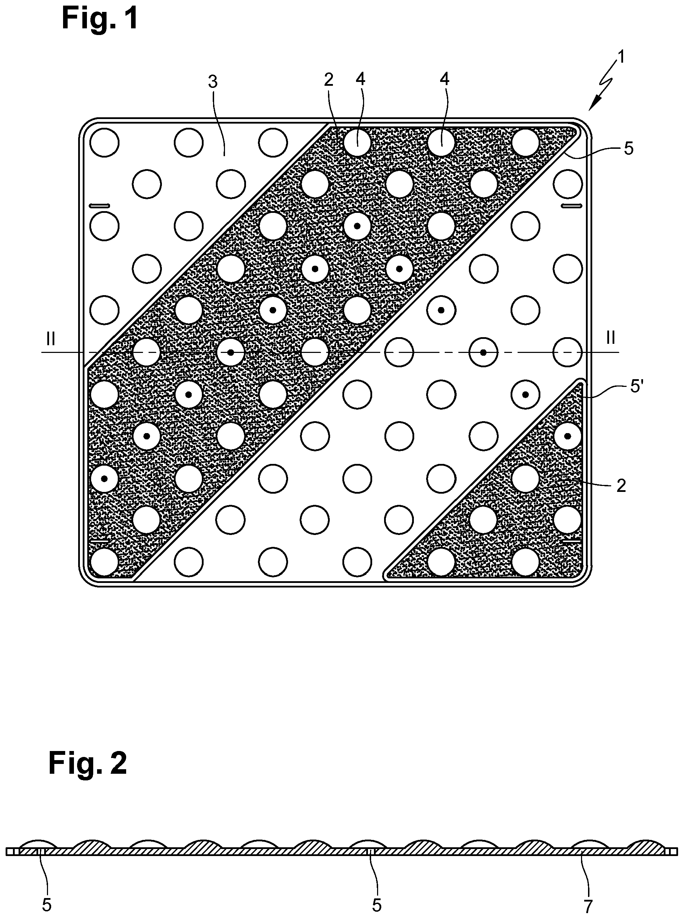

On a donc représenté sur la figure 1 une vue de dessus d'une dalle podo tactile (1) conforme à une première application de l'invention. Tel qu'on peut observer, cette dalle comporte des zones différenciées, respectivement (2) et (3) en termes de couleurs. En outre, elle est munie de plots en relief (4), en l'espèce en forme de dôme de diamètre à la base d'environ 25 millimètres et de hauteur voisine de 5 millimètres. Ces plots (4) pourraient cependant être en forme de pyramide ou autre, voire même être munis de stries aptes à générer un effet anti-dérapant, lorsque cela est requis.

Dans l'exemple décrit, cette dalle comporte deux couleurs différenciées. Cependant, l'épaisseur de la base de la dalle demeure constante, typiquement 2,5 millimètres, et, ainsi qu'on peut l'observer sur la figure 2, la hauteur des plots en relief est également sensiblement constante.

Cette dalle est réalisée en matière plastique obtenue par bi-injection, et plus particulièrement en TPU (polyuréthane thermoplastique) ou en PVC. La différenciation des couleurs provient de la mise en œuvre de pigments différenciés.

La réalisation d'une telle dalle s'effectue comme déjà dit par moulage par injection, et ce de la manière suivante.

On met en œuvre un moule muni d'une partie d'empreinte inférieure (9) et d'une partie d'empreinte supérieure (8).

La partie d'empreinte inférieure (9) est pourvue de pavés (10), mobiles en translation verticale, montés sur des rampes (12) à commande hydraulique. Le nombre de pavés mobiles correspond aux zones (2) de la dalle de la seconde couleur. En outre, la face supérieure des pavés mobiles (10) est usinée de telle sorte à définir notamment les volumes (11) correspondant aux plots (4) à réaliser.

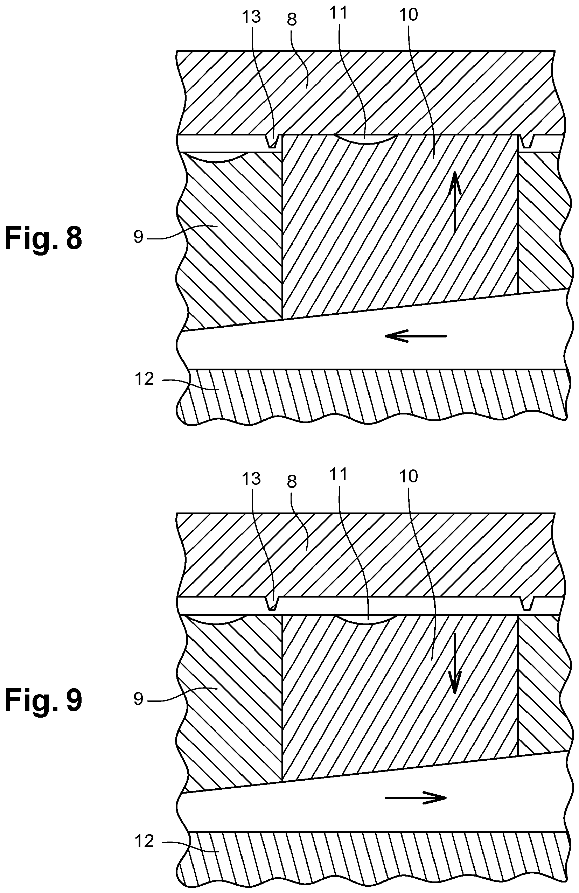

Ainsi, une fois la fermeture du moule constitué de ces deux parties d'empreinte, on procède à la translation verticale des pavés mobiles (10) en question, d'une hauteur correspondant à l'épaisseur de la base de la dalle, soit en l'espèce d'environ 2,5 millimètres, tel qu'on peut l'observer sur la figure 8. Ce faisant, la surface supérieure des pavés mobiles vient en contact avec la face inférieure de la partie d'empreinte supérieure.

De par ce contact entre les pavés mobiles et la partie d'empreinte supérieure, lors de la première injection de matière plastique, et en l'espèce de TPU ou de PVC, la matière plastique va donc se répandre dans tout le moule à l'exclusion des zones ainsi obturées par les pavés, et ainsi constituer les zones (3). Cette injection s'effectue avantageusement par plusieurs buses d'injection, la température et la pression d'injection étant fonction de la matière utilisée, et de son grade notamment.

Après quelques secondes de refroidissement, les pavés mobiles (10) de la partie d'empreinte inférieure sont rétractés de la même hauteur, soit environ 2,5 mm (voir figure 9), tout en libérant les buses d'injection de la seconde matière plastique, donc de couleur différente. On procède alors à l'injection de celle-ci, là également typiquement du polyuréthane souple ou de PVC, mais teinté différemment, afin de constituer les zones (2).

Une fois le refroidissement réalisé, on procède à l'ouverture du moule et à l'éjection de la pièce.

Selon une caractéristique avantageuse de l'invention, et compte tenu de la souplesse de la matière plastique injectée, lorsque l'on injecte la seconde matière plastique, donc à température élevée, il peut se produire des effets de fluage entre les deux matières lors de l'injection de la seconde, susceptible d'affecter les caractères esthétiques de la dalle en résultant au niveau des lignes de jonction.

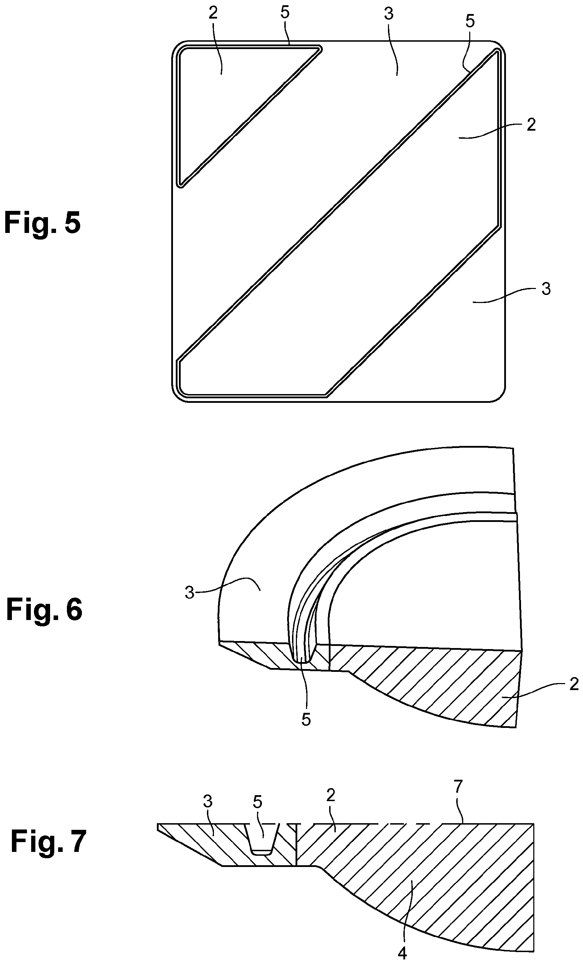

Afin de pallier cette difficulté, on munit la partie d'empreinte supérieure ou statique (8) d'une nervure (13), typiquement d'une hauteur de 1,8 millimètre et d'une largeur de 2 millimètres dans l'exemple décrit, qui s'étend en direction de la partie d'empreinte inférieure (9) selon toute la périphérie des zones (3) recevant la seconde matière. Cette nervure est de nature à s'opposer à la pression générée lors de l'injection de la seconde matière plastique, et ainsi à limiter ce fluage, outre à limiter le retrait de la pièce ainsi réalisée dans le moule. On a représenté le détail de la rainure (5) résultat de cette nervure au sein des figures 6 et 7.

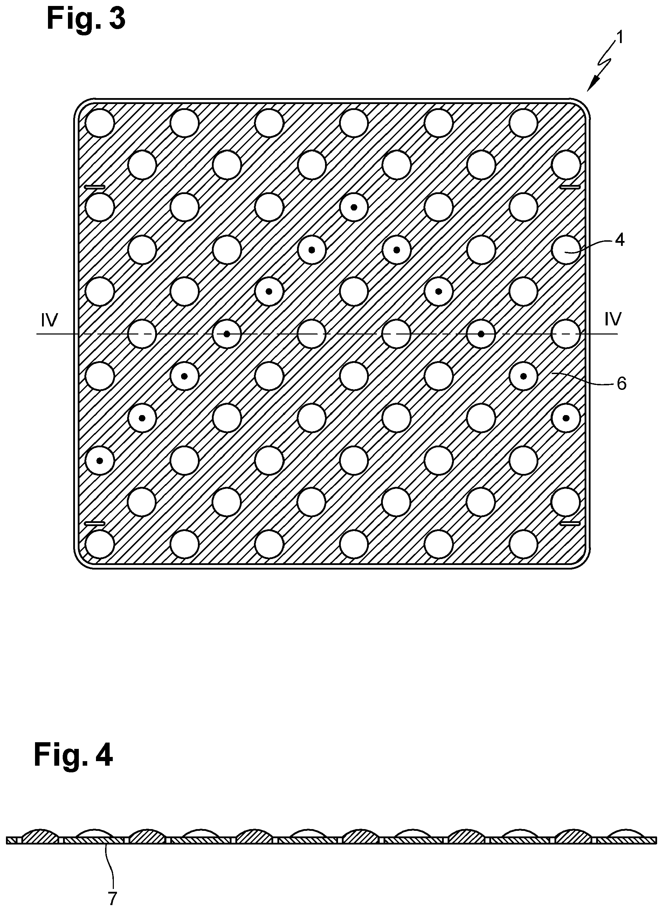

Selon un second mode de réalisation de l'invention, illustrée au sein des figures 3 et 4, les différences de couleurs interviennent entre d'une part les plots en relief (4) et d'autre part la base (6). Le principe de réalisation demeure cependant identique à celui précédemment décrit.

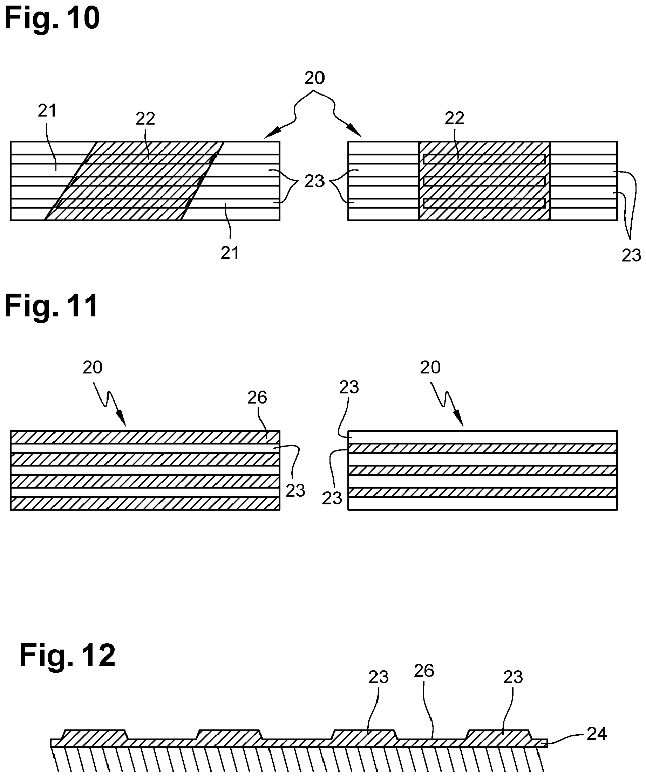

On a représenté en relation avec les figures 10 à 12 une autre application de l'invention, plus spécifiquement dédiée aux bandes de guidage pour personnes aveugles et malvoyantes. Plus spécifiquement, ces bandes de guidage (20) sont constituées par l'assemblage de plusieurs dalles juxtaposées les unes avec les autres, et présentant sur leur surface supérieure des zones linéaires en relief (23). Typiquement ces zones linéaires en relief (23) présentent une largeur voisine de 30 millimètres et une hauteur par rapport à la dalle ou bande voisine (26) de 5 millimètres. Ces zones linéaires en relief sont séparées les unes des autres d'une distance voisine de 30 millimètres.

Selon l'invention, ces bandes sont également bicolores. Elles sont réalisées en matière plastique, de même nature que celles précédemment évoquées, et par bi-injection.

Elles présentent sur la face supérieure des couleurs différenciées, soit par zones intégrales (21, 22) de la bande (figure 10), soit correspondant aux zones linéaires en relief (23) (figure 11), cette différenciation de couleurs résultant du moulage.

Leur mode de réalisation est similaire au mode de réalisation décrit en relation avec les figures 8 et 9, seule la forme supérieure du pavé mobile étant modifiée.

Quel que soit le mode de réalisation, une fois la dalle refroidie et éjectée hors du moule, on positionne, au niveau de sa face (7) destinée à venir être fixée sur le sol, un adhésif double face, typiquement en rouleaux ou découpé au format, puis laminé sur ladite face. Alternativement, lesdites dalles peuvent être solidarisées au sol à l'aide d'une colle adaptée.

On conçoit tout l'intérêt de la dalle de l'invention, qui peut être bicolore, voire multicolore, ce qui permet d'augmenter l'effet de signalétique, et notamment l'éveil à la vigilance et corollairement la sécurité recherchée de par la mise en œuvre de telles dalles.

## Revendications

1. Procédé pour la réalisation d'une dalle de signalisation en matière plastique munie d'une pluralité de zones en relief (4) dirigés vers le haut, consistant :
▪ à mettre en œuvre un moule à deux parties d'empreinte (8, 9), dont l'une (9) des parties d'empreinte comporte au moins un pavé (10) mobile en translation, la face supérieure dudit pavé, destinée à venir en contact avec l'autre partie d'empreinte statique (8) étant munie de zones en creux (11) correspondant aux zones en relief (4) à réaliser ;
▪ à refermer le moule ;
▪ à induire la translation dudit au moins un pavé mobile (10) jusqu'à ce qu'il vienne en contact avec la paroi interne de la partie d'empreinte statique (8) ;
▪ à injecter une première matière plastique d'une couleur déterminée ;
▪ à laisser partiellement refroidir ladite matière plastique ainsi injectée ;
▪ à induire la translation dudit au moins un pavé mobile (10) selon la direction opposée à la translation précédente ;
▪ à injecter une seconde matière plastique venant occuper le volume ainsi libéré et de couleur différente de la première matière plastique ;
▪ à refroidir le moule ;
▪ puis à éjecter la dalle ainsi obtenue.

2. Procédé pour la réalisation d'une dalle de signalisation selon la revendication 1, dans lequel on munit la partie d'empreinte statique (8) du moule d'une nervure en saillie (13) s'étendant sur toute la périphérie des zones destinées à être remplies de la seconde matière plastique.

3. Procédé pour la réalisation d'une dalle de signalisation selon l'une des revendications 1 et 2, dans lequel la matière plastique mise en œuvre est choisie dans le groupe comprenant le polyuréthane thermoplastique (TPU) et le PVC souple.

4. Dalle de signalisation (1) en matière plastique munie d'une pluralité de zones en relief (4) dirigés vers le haut, et comprenant au moins sur sa face supérieure des zones (2, 3) de couleurs différenciées résultant du moulage obtenue par le procédé selon l'une des revendications 1 à 3.

5. Dalle de signalisation (1) selon la revendication 4, dans laquelle les zones de couleurs différenciées (2, 3) correspondent à des parties de la surface supérieure de la dalle.

6. Dalle de signalisation (1) selon la revendication 4, dans laquelle les zones de couleurs différenciées correspondent respectivement aux zones en relief (4) et à la base (6) de la dalle.

7. Dalle de signalisation (1) selon l'une des revendications 4 à 6, dans laquelle la face inférieure (7) de la dalle, c'est-à-dire destinée à être fixée sur le sol ou sur tout autre surface, est revêtue après réalisation d'un adhésif double face, muni d'un film de protection de l'adhésif, typiquement en papier siliconé, ou de colle.

8. Dalle de signalisation (1) selon l'une des revendications 4 à 7, dont les zones en relief sont constituées de plots, et constituant une dalle podo tacile.

9. Dalle de signalisation (1) selon l'une des revendications 4 à 7, dont les zones en relief sont constituées de zones linéaires, et constituant une bande de guidage.
